# EUROPEAN PATENT SPECIFICATION

(11) **EP 3 712 748 B1**
(45) Date of publication and mention of the grant of the patent: **01.11.2023**
(21) Application number: 20156162.8
(22) Date of filing: 07.02.2020
(51) Int. Cl.: G06F 3/01, G02B 27/01, G06F 1/16

(54) **HEADS-UP DISPLAY SYSTEM AND METHOD**
HEAD-UP-ANZEIGEVORRICHTUNG UND -VERFAHREN
SYSTÈME D'AFFICHAGE TÊTE HAUTE ET PROCÉDÉ

(30) Priority: 19.03.2019 GB 201903738
(43) Date of publication of application: 23.09.2020
(73) Proprietor: Sony Interactive Entertainment Inc., Tokyo 108-0075 (JP)
(72) Inventor: WILLIAMS, Nigel John, London, W1F 7LP (GB); WALKER, Andrew William, London, W1F 7LP (GB); CLARKE, Jake Leigh, London, W1F 7LP (GB); STARKEY, Robert Christopher, London, W1F 7LP (GB)
(74) Representative: D Young & Co LLP

(56) References cited:
- WO-A1-2013/112603
- WO-A1-2017/075100
- US-A1- 2016 085 301
- US-A1- 2017 235 360

## Description

This disclosure relates to a heads-up display system and method.

In recent years the desire for immersive content has increased; this is driven (at least partly) by the increase in processing power available to render content, by the increase in the quality of display devices available to users, and by the increasingly-widespread use of virtual reality (VR) content with head-mountable display devices (HMDs). These factors have led to an increase in the production of immersive content, which is often more complex than earlier content. For example, the number of possible interactions may be increased, as well as the range of types of interaction and the scale of the virtual environment in which interactions may be performed.

However, the increase in the complexity of games has also led to an increase in the amount of information that is displayed on the screen. This information is often overlaid upon the content, obscuring the user's view of a portion of the displayed content. Alternatively, or in addition, information may be presented alongside the displayed content, such as in a sidebar, thereby reducing the effective display area for the content itself. Examples of such information include health bars, ammunition gauges, hints, and quest reminders.

The provision of such information can often interfere with the immersiveness of the content, as this information is often not in keeping with the rest of the displayed content. The user is therefore made very aware of the information, and as such is frequently reminded that they are viewing content rather than experiencing the shown events first-hand. The immersiveness of an interactive experience may therefore be impaired as a result of the display of such information.

This can be an issue that is present when using any suitable display device - examples of such display devices include both HMDs and televisions. Such issues are also not limited to games or other interactive content; for example, the provision of subtitles or other captions during a movie or the like may provide similar distractions or breaks in immersion for a user.

It is therefore desirable to be able to reduce the amount of information that is displayed to a user, or to otherwise reduce the impact of its display upon a user's enjoyment of content.

It is in the context of the above problems that the present invention arises. Previously proposed arrangements are disclosed in WO 2013/112603 A1, WO 2017/075100 A1 and US 2016/085301 A1, as well as US 2017/235360 A1.

The present invention is defined by the appended independent claims.

Further respective aspects and features of the present invention are defined in the appended dependent claims.

Embodiments of the present invention will now be described by way of example with reference to the accompanying drawings, in which:
Figure 1 schematically illustrates a user wearing a display unit;
Figure 2 schematically illustrates a first exemplary display unit;
Figure 3 schematically illustrates a second exemplary display unit;
Figure 4 schematically illustrates a third exemplary display unit;
Figure 5 schematically illustrates an entertainment system;
Figure 6 schematically illustrates the use of a heads-up display;
Figure 7 schematically illustrates use of a heads-up display;
Figure 8 schematically illustrates areas of focus in displayed content;
Figures 9-11 schematically illustrate a varying level of detail of displayed information;
Figure 12 schematically illustrates a display system;
Figure 13 schematically illustrates a display system;
Figure 14 schematically illustrates a heads-up display system; and
Figure 15 schematically illustrates a heads-up display method.

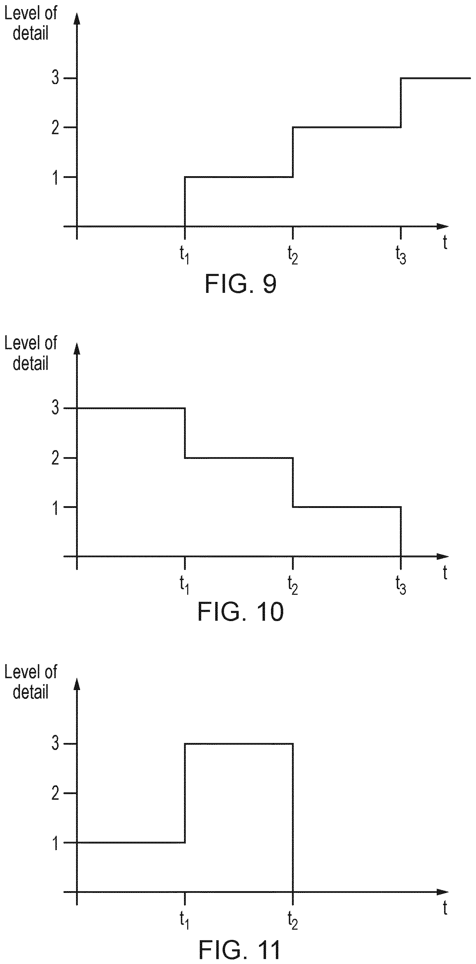

Figure 9 discloses an embodiment under the scope of protection of the claimed invention but not the examples specified in figures 10 and 11. In embodiments of the present disclosure, it is considered that a user wears a heads-up display that is operable to provide information in addition to (or instead of) information provided on a display which (in at least some embodiments) presents media content to the user. The heads-up display may be provided as a standalone unit, or may be provided as a part of a larger headset with additional earpieces or display elements as appropriate. The heads-up display may be provided for one or both of a user's eyes, although reference is generally made in the following description to heads-up displays for a single eye.

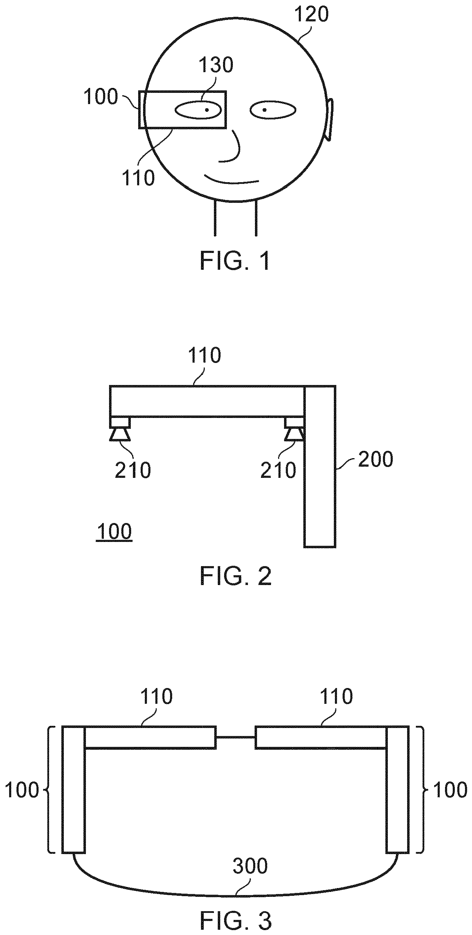

Figure 1 schematically illustrates a user wearing a heads-up display unit. The display unit 100 includes a display element 110 that covers the right eye 130 of the user 120. As will be discussed below, the display unit 100 may comprise one or more processing elements, image generating elements, wired/wireless communication means, and/or a dedicated power supply unit.

Any suitable configuration for the display unit 100 may be provided; for example, the display unit may comprise a support member that rests on the nose of the user 120 in order to improve the stability of the display unit 100. Similarly, the display unit 100 may be provided so as to be able to clip on (or otherwise attach, such as via one or more straps) to glasses that are worn by the user 120. These may be prescription glasses that the user 120 normally wears, for example, or a glasses frame provided for use with the display unit 100.

As noted above, the heads-up display may be provided for both of the user's eyes in some embodiments. This may be achieved using two separate display units 100, arranged such that one covers each eye. Alternatively, a single display unit with a display element 110 corresponding to each of the user's eyes may be provided. The display element 110 may be of any suitable type so as to allow a user to view both the display element 110 and the outside environment (such as a second, more distant, display). For example, see-through arrangements using waveguides or image projection techniques may both be suitable.

Figure 2 shows a schematic plan view of the display unit 100. In this example, a single display element 110 is provided that is operable to overlay one eye (in this example, the right eye) of a user that wears the display unit 100. In addition to the display element 110, the display unit 100 includes a support arm 200 and one or more cameras 210.

The support arm 200 may simply be an element that assists in keeping the display unit 100 mounted upon the user's head; alternatively, it may also store one or more processing and/or communication elements. Of course, these processing and/or communication elements may be located in any suitable location - examples include being affixed to the user's head, arm, or upper back, or in a clothing pocket or worn bag, and connected to the display unit 100 via a wired or wireless communication link.

The cameras 210 are arranged so as to be able to capture images of the user's eye, so as to facilitate the performing of gaze tracking for the user. Any suitable method of monitoring the user's eyes may be implemented; for example, one or more infra-red cameras may be used with an optional infra-red light source (to illuminate the user's eyes) to capture images suitable for gaze tracking. In some embodiments, tracking may be performed for a single eye and tracking information for the other eye may be inferred from this.

The cameras 210 may be omitted in embodiments in which eye tracking is performed in an alternative manner; for example, if a camera associated with another device (such as an HMD, processing unit, or other display) is used for eye tracking then there is no need for cameras to be provided on the display unit 100.

Figure 3 schematically illustrates a plan view of an alternative display unit arrangement. In this arrangement, a pair of display units 100 are provided that are optionally connected by a cable 300. This cable 300 may carry power and/or data, or simply be provided so as to assist with the stability of the display unit pair when worn by a user. Similarly, a connector 310 may be provided between the display elements 110 of the display units 100.

Either or both of the display units 100 may comprise cameras or the like for performing gaze tracking, as shown in Figure 2; however, they are omitted from Figure 3 for the sake of clarity.

The arrangement of Figure 3 may be advantageous in that the user is provided with a heads-up display for each eye. It may also be the case that the display units 100 are separable such that they can be used on their own or by different users - this can increase the flexibility of the heads-up display system. Each of the display units 100 may display different content to the user (or users), or may display the same content as appropriate. It will also be appreciated that as a variant of the arrangement of Figure 2, a similar form factor to that in Figure 3 may be provided with just one display element for one eye and a passive component for the other eye (such as clear glass), simply to provide additional balance and stability for the user.

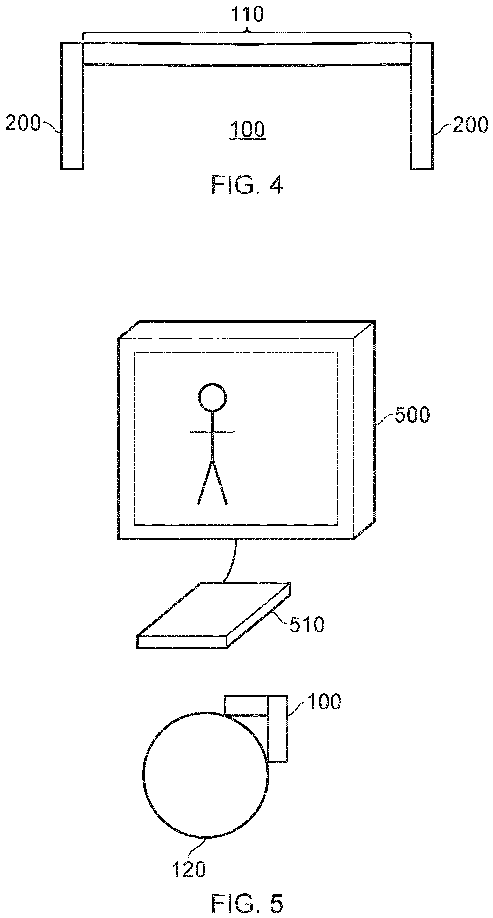

Turning to Figure 4, this schematically illustrates an arrangement in which a single display element 110 is provided that is operable to display content to both of the user's eyes simultaneously. Of course, it is possible that only one of the user's eyes may be provided with imagery at a time (rather than requiring that both eyes are provided with an image at all times), and it is considered that the user's eyes may be provided with different images where appropriate.

Figure 5 schematically illustrates the use of a display unit as described above in conjunction with a first display 500. While the display is shown as a television, any suitable display may be provided - including an HMD, so long as the user is able to view the display unit and the content displayed by the HMD.

A user 120 is shown with a display unit 100 mounted upon their head, whilst viewing content shown on a display 500. The display 500 is driven by an associated processing unit 510, such as a games console or personal computer, and may comprise any suitable media content - examples of suitable content include images, videos, and videogame content. The user 120 may be interacting with the displayed content (for example, via the processing unit 510) using a controller or other peripheral (not shown).

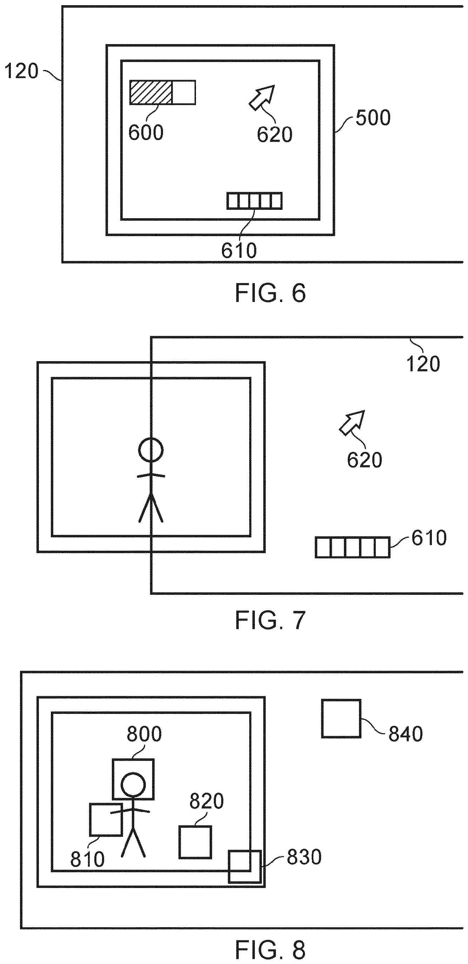

Figure 6 schematically illustrates the arrangement of Figure 5 from the viewpoint of the user 120. In this Figure, it is apparent that the display element 120 is arranged in the user's view so as to completely overlap the display area of the display 500 - of course, this is a function of the user's viewing direction, rather than being a predetermined relationship between the hardware elements.

It can be seen in Figure 6 that the image shown on the display 500 has been augmented with additional image content displayed on the display element 120; from the viewpoint of the user, the content displayed on the display element 120 appears as an overlay for the content shown on the display 500. Each of the pieces of displayed additional image content serves as an example of additional information that may be provided to aid a user or otherwise improve their experience in interacting with the display 500. Of course, any suitable information may be provided in any suitable format (such as text, still image, or video); the below examples are not intended to be limiting in any way. While it is shown that all of the additional information is presented to the user view the display element 120, it may be the case that some information is still provided on the display 500 - the amount of information displayed at each device may be determined freely.

A first example is that of the health bar 600 relating to one or more characters within a game that is being played or viewed by the user on the display 500. Any information relating to a character may assist a user in understanding the context of the displayed content and making informed gameplay decisions.

A second example is that of the inventory 610 that identifies one or more items that are available to the one or more characters within a game that is being played or viewed by the user on the display 500. This is information that would often be available to a user only by navigating menus to specifically seek out the inventory, and as such an input burden is removed from the user in obtaining this information.

A third example is that of the guidance arrow 620 that can be used to provide hints to a user about the location of one or more elements within the content, such as a preferred destination, another in-game character, or an object required for a quest.

While these examples relate mostly to game content, of course equivalent displays of information may be provided for any other type of content. For example, during a movie information identifying a particular actor may be displayed, or information about the current elapsed time or scene within the movie. Similarly, subtitle or other caption information may be provided via the display element 120.

Figure 7 schematically illustrates an additional example of the arrangement of Figure 5 from the viewpoint of the user 120. In this Figure, it is apparent that the display element 120 is arranged in the user's view so as to only partially overlap the display area of the display 500.

It can be seen from Figure 7 that the additional image content as shown on the display element 120 need not be displayed so as to overlap the display area of the display 500. For example, the inventory 610 and guidance arrow 620 are shown on the display element 120 in a position so as to not overlap the display 500. The health bar 600 is not displayed in this example, although it could of course be moved to be displayed so as to overlap another area of the display 500 (or not overlap at all).

Of course, it is not required that the display element 120 does not fully overlap the display 500 in the user's view for the display of additional information to not overlap the display area of the display 500. For example, it can be seen in Figure 6 that a substantial amount of area is available for the display of content that does not overlap the display area of the display 500.

In some embodiments, the information that is displayed is dependent upon the viewer's area of focus on the display 500. Information relevant to the element displayed at the area of focus may be provided, in addition to or instead of additional information relating to other aspects of the content. For example, a character that is at the user's area of focus may be identified, and health information associated with only that character may be displayed. This may be advantageous in that it can decrease the amount of information that is displayed to a user (improving the immersiveness and aiding clarity) whilst still providing relevant information where appropriate.

The area of focus of a user may be identified using any suitable gaze tracking techniques; for example, an eye tracking arrangement may be associated with the processing device 510. Alternatively, or in addition, the gaze tracking may be implemented using the inward-facing cameras 210 as shown in Figure 2. The identified gaze direction of the user may be translated into a position on the display using information about the relative position/orientation of the user and the display 500 - for example, generated by a head tracking method.

Figure 8 schematically illustrates an example of a plurality of possible identified areas of focus. The identification of any of these as the user's area of focus may result in the display of different information than if any of the other areas were identified as the user's area of focus; of course, different areas of focus may correspond to the same information for display.

While the areas of focus are shown as squares that are effectively selectable via a user's gaze, this may not be the case. For example, in some embodiments any area of the display area of the display 500 may be identified as an area of focus of the user; once identified, it is then determined whether there is any corresponding information for display. The corresponding information may be defined for display areas of the display 500, or for specific content elements such as in-game characters (or portions of content elements, such as the in-game character's head). Similarly, areas may be nested, so that a larger area comprises a smaller sub-area in which different, more, or less material is displayed.

The area 800 corresponds to a displayed character's head. This may indicate that the user is interested in particular information about that character - general information about the character (such as remaining health, name, and friend/foe status) may be provided to the user via the display unit 100 in response to an identification of the area 800 as the user's area of focus. Similarly, the identification of the area 800 as the user's area of focus may be taken as an indication of the user paying attention to that character; the displayed information may instead (or additionally) include subtitle information corresponding to dialogue associated with that character.

The area 810 corresponds to a displayed character's hand. This may instead be taken as an indication that the user is interested in an object that is being held by the character. In this case, information about the object (such as the name of the object, its weight, and its remaining ammunition in the case of a weapon) may be displayed rather than information about the character.

The area 820 corresponds to an area of the display 500 in which content is displayed other than the character. In such a case, information about the virtual environment could be displayed such as weather conditions or the like. Of course, in this case (as in any of the other examples) it is possible that no corresponding information is displayed at all.

The area 830 corresponds to an area of the display 500 which does not form a part of the display area. This may be used to display information about the game itself rather than the in-game environment, such as a completion status or game session time. This is information which would not be anticipated as being of sufficient interest to a user so as to overlay display areas of the display 500.

The area 840 corresponds to the identified area of focus being outside of the display 500. In such a case it may be appropriate to instead display information that does not directly relate to the game or the in-game environment; this enables the user to access additional information whilst reducing the likelihood of accidentally displaying this information (by virtue of the distance between the focus area 840 and the display area of the display 500). Examples of suitable information include the date and time, device/peripheral battery levels, host system options, or social interactions (such as game invitations) from other users.

Of course, the above examples should be taken only as an indication of possible information that may be shown. The content that is shown, and the display areas to which that information correspond, may be selected freely.

The location of the information that is to be displayed on the display unit 100 may be determined in any suitable manner. Any of the below factors may be considered, in any suitable combination; for instance, the location of displayed information may be determined on a per-object, per-information, and/or per-area-of-focus basis.

In a first example, information relating to a determined area of focus may be displayed in that area. This enables a user to directly relate the information to the object that is focused upon, and reduces a burden upon a user in modifying their gaze direction to view the displayed information.

In a second example, information relating to a determined area of focus may be displayed above or below that area. This may also enable a user to directly relate the information to the object that is focused upon, whilst not risking obscuring the content that is shown on the display 500.

In a third example, information relating to a determined area of focus may be displayed in any suitable area of the display 500 that would likely not occlude any important information. Such areas may be identified based upon an analysis of the displayed content to identify background areas, for example, which may be overlaid without causing problematic occlusions. Alternatively, or in addition, the suitable areas may be determined as those which do not themselves contain any areas of focus that are associated with additional information.

In a fourth example, information relating to a determined area of focus may be displayed in dependence upon the object that is focused upon by a user (that is, the object which occupies a location identified as the area of focus of a user). For example, information about a character may be displayed above the character's head, while information about a door (such as where it leads) may be displayed overlaying the door.

In a fifth example, information relating to a determined area of focus may be displayed at a fixed position relative to the display 500 (for example, centre-bottom, or at a predetermined position outside the first display, as seen in Figure 7), so that a user becomes familiar with where such supplementary information may appear, potentially simplifying visual assimilation of information.

In the third and fifth examples, optionally the information may persist when the user's gaze moves away from the determined area of focus (e.g. the head, hand etc.), so that they can focus on the information instead. Optionally the information may remain for a short period (for example between 0.5 and 5 seconds) and then disappear if the user does not look at it within this period. The information may then disappear after a (potentially different) short period after the user has finished looking at it.

As noted above, combinations of these examples may be implemented in some embodiments. For instance, the fourth example may be preferentially used but when information about where to place the information is not available for that object, the system will fallback to a preferred one of examples one, two, three or five to determine the placement of the information.

The position at which the elements are displayed on the display element 120 may be determined based on characteristics of a user. For example, the inter-pupillary distance may be used to determine a suitable location for the display of information. A user's comfort in viewing the information may also be determined, for example by determination of whether a user is squinting or whether the user's eye motions are characteristic of eye strain. In response to this, the focal plane or position of the information may be modified to make the viewing more comfortable for the user.

In a number of embodiments, the user may be able modify the position of one or more pieces of displayed information so as to appear in a more suitable (such as a less obstructive) display position. For example, a user input may be provided that identifies that a movement of displayed information is desired - the user may press a button to confirm motion, then look to a desired position before pressing the button again to confirm a final position. This position may be defined relative to the display element 120 or the display 500, for example. Of course, any other suitable method for modifying the display position may be considered appropriate in these embodiments.

In some embodiments, the amount of information to be displayed may also vary, rather than only its display location. As with the display location, the amount of information to be displayed may vary in dependence upon the object to which the information corresponds, or the presence of nearby areas of interest that should not be obscured.

For example, objects may have an associated significance that may be used to determine how much information should be shown. For instance, in a game a boss enemy may be regarded as more significant than other enemies and therefore more information (such as a name, health, list of abilities and weaknesses) may be displayed about the boss when the user's area of focus coincides with the boss' location than when the user's area of focus coincides with another enemy's location (such as just health).

In some cases objects with a below-threshold significance may never have corresponding information displayed, while those objects with an above-threshold (a different threshold, in most cases) will either always have information displayed or be associated with a far larger area of focus.

Similarly the amount of information that is displayed to a user may vary over time. Figures 9-11 schematically illustrate examples of such variations. The embodiment of figure 9 discloses the claimed invention but not the examples of figures 10 and 11. These examples are described with reference to a character in a game, but of course any object or element could be a suitable target for which corresponding information is to be displayed. Similarly, the information that is provided at each level of detail is purely exemplary, and any suitable information (or hierarchy of information) could be used.

Figure 9 schematically illustrates an increase in the amount of information that is displayed with an increased duration of user focus upon an area of user focus. Such a variation in the amount of information that is provided to a user may be advantageous in that the display of information is not likely to cause an impact on the user's viewing unless the user is specifically interested in obtaining that information - the likelihood of accidental display of larger amounts of information is reduced.

In the example described by this Figure, the user is initially presented with no information about a character upon which they are focused. After an elapsed time t₁, the level of detail increases to a first level in which the user is presented with the character's name only.

Should the user change their area of focus to a different object at this time, the process begins anew and no further information will be displayed. However, if the user maintains their area of focus until an elapsed time t₂, the level of detail increases to a second level in which the user is additionally provided with the number of hit points that the character has. Similarly, if the user maintains their area of focus until an elapsed time t₃ then the level of detail increases to a third level in which they will additionally (or alternatively) be provided with an indication of the character's strengths and weaknesses.

While the discussion above makes reference to an elapsed time, in some embodiments it is instead considered that an input may be provided by a user in order to increase (or, as discussed below, decrease) the amount of information shown. Examples of such inputs include the user winking (or otherwise providing an input with the eyes), making a predetermined gesture, using a voice command, and providing an input via a peripheral.

Figure 10 schematically illustrates a decrease in the amount of information that is displayed with an increased duration of user focus upon an area of user focus. Such an example may be advantageous in that a user may quickly become acquainted with all of the information associated with the character, whilst also having that information gradually disappear so as to not interfere with their viewing of the content any further. Reference is made to the levels of detail as described with reference to Figure 9.

In the example described by this Figure, the user is initially presented with a large amount of information (corresponding to the third level of Figure 9, for example) about a character upon which they are focused. After an elapsed time t₁, the level of detail decreases to the second level in which the user is presented with the character's name and hit points.

If the user maintains their area of focus until an elapsed time t₂ the level of detail decreases further, reaching the first level in which the user is provided only with the character's name. Similarly, if the user maintains their area of focus until an elapsed time t₃ then the level of detail decreases to a level in which no information is to be shown.

Figure 11 schematically illustrates a variation in the amount of information that is displayed with an increased duration of user focus upon an area of user focus. Such an example may be advantageous in that the user is able to achieve an immediate level of familiarity with a character, whilst not being provided with further information unless their interest is continued. This may provide a user with a greater level of interaction with the information providing device. Reference is made to the levels of detail as described with reference to Figure 9.

In the example described by this Figure, the user is initially presented with a small amount of information (corresponding to the first level of Figure 9, for example) about a character upon which they are focused; for example, the character's name. After an elapsed time t₁, the level of detail increases to the third level in which the user is presented with the character's name, hit points and strengths/weaknesses.

If the user maintains their area of focus until an elapsed time t₂ the level of detail decreases sharply to a level in which no information is to be shown. Such a level of detail may also be reached if the user redirects their gaze such that a different area of focus is identified, as described above.

In some embodiments, the display of information is selectively performed. For example, a user input or an above-threshold (or otherwise distinctive) eye motion may be required to indicate that the area of focus is one for which information is desired. In the context of the above Figures, the time from which the elapsed time is measured may be determined as the time of a user input or particular eye motion, for instance. This may be advantageous in that information is not shown for every displayed element that the user views, thereby reducing the display of less-desirable information; such a feature may be implemented in conjunction with other factors to provide a more specific response. For instance, such a method may only be implemented for displayed elements with a below-threshold significance.

It is further considered that user preferences may be used to modify the display of information to a user. Any suitable modifier may be considered, several examples of which are discussed below.

A first user setting that may be modified is that of modifying the minimum/maximum levels of detail that are to be shown. For example, a user that is new to the game may wish to be provided with more information than a more experienced user so as to become better acquainted with the game. This may result in an arrangement in which whenever information with a level of detail lower than the threshold would be shown, instead information with a level of detail equal to (or greater than) the threshold is displayed.

Another user setting that may be modified is that of defining the one or more elapsed times at which a level of detail changes as shown in Figures 9-11. In addition to this, the profile of the changes to the level of detail may also be selected by a user in advance; for example, selecting which of the profiles shown in Figures 9-11 should be used (that is, whether detail should increase/decrease/otherwise vary).

A user may also be able to define custom levels of significance for different objects - for example, elevating the level of significance for particularly troublesome opponents for that user above the level that is defined by default.

Information about how best to display information, the amount of information to display, and/or the content of the information that is displayed may be determined in dependence upon user feedback. For example, if a user provides an input to show/hide information after a particular elapsed time, or for particular objects or types of objects, it may be understood that it would be advantageous to modify the user's settings in line with these preferences. In some embodiments, such a modification may be provided in dependence upon the preferences of the wider user base (for example, by crowdsourcing information about how the information is displayed) or a subset of the user base.

Content may be specifically authored to take advantage of the systems and techniques described herein. However alternatively or in addition, content that is not specifically authored in this manner may be adapted to make use of them.

It will be appreciated for example that overlaid information such as health bars, inventory items and the like are qualitatively different to the game underneath; they are typically not part of an image rendered from a 3D environment, but are overlaid afterwards. A helper application, a game mod, or a component of the host operating system may interrupt this overlay process, to redirect this information to the image that is to be presented on the heads up display. Optionally the position of each block of information relative to the center of the main image may be exaggerated (e.g. scaled by more than 100% to push it to the edge (or beyond the edge) of the main image, thus clearing the main image of the first display. Alternatively any of the five example strategies discussed previously herein may be used. The blocks of information may then optionally further only be shown if the user looks in their direction (i.e. the determined area of focus is the expected location of an information block); again if the positions of these blocks of information are optionally fixed, then the user can quickly learn where to look. Similarly optionally the blocks of information may be temporarily shown anyway if their contents (or appearance) changes. If metadata identifying the information items is also known (for example by use of a configuration file or similar specific to the game), then they can also be positioned according to their identified nature or according to information in the metadata, for example according to any of the five example strategies discussed previously herein. In this case also further rules may be utilized; for example if a player's health drops below a certain threshold, the health bar may be shown continuously until the player's health recovers back above it.

It will be similarly appreciated that for pre-recorded content, subtitles and the like are similarly overlays sourced from distinct data streams that are overlaid on the content image, and hence may be similarly diverted to the heads up display. This may be of use for example when only one person in a group wants to see subtitles when watching a film.

Using the above techniques, legacy titles may be used with the heads up display, optionally in conjunction with a title specific configuration file providing information about the nature, position, and/or insertion stage of overlay content that can be diverted to use the heads up display.

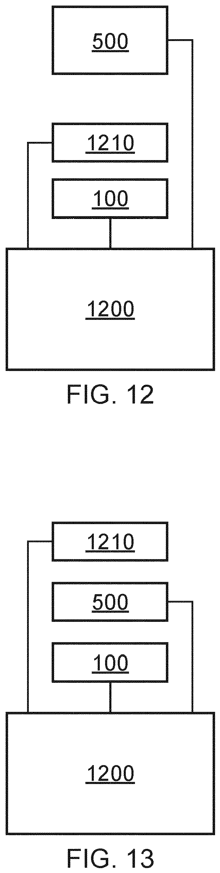

Figure 12 schematically illustrates a system for providing a user with additional information via a heads-up display unit, where the additional information relates to content shown on a display unit other than the heads-up display unit.

A processing unit 1200 is shown that is operable to perform processing for driving the heads-up display unit 100, the eye tracking unit 1210, and the display 500. While shown as a single unit here, this may of course be configured in a manner that distributes the processing between two or more processing units. For example, the processing unit 1200 may comprise a processor mounted upon the user or the display unit 100 that drives the display of the additional information to the user, and a games console that is operable to control the eye tracking unit 1210 and the display 500.

The display 100 is arranged in closest proximity to the user (relative to at least the display 500, as the eye tracking unit 1210 may be formed as a part of the display unit 100 or may be located remotely from the user) such that the display of information to the user will overlay content shown on the display 500 when they overlap.

Figure 13 schematically illustrates an alternative configuration of the system of Figure 12 in which a see-through style head-mountable display unit is provided as the display 500. In this case, the display 500 may be located between the eye tracking unit 1210 and the display unit 100 - indeed, the eye tracking unit 1210 may be an eye tracking unit associated with the display 500.

Of course, the relative arrangements of the display devices and eye tracking unit or units may be selected freely by the skilled person insofar as the functions described may be implemented; the present disclosure should not be considered to be limited only to those configurations described above.

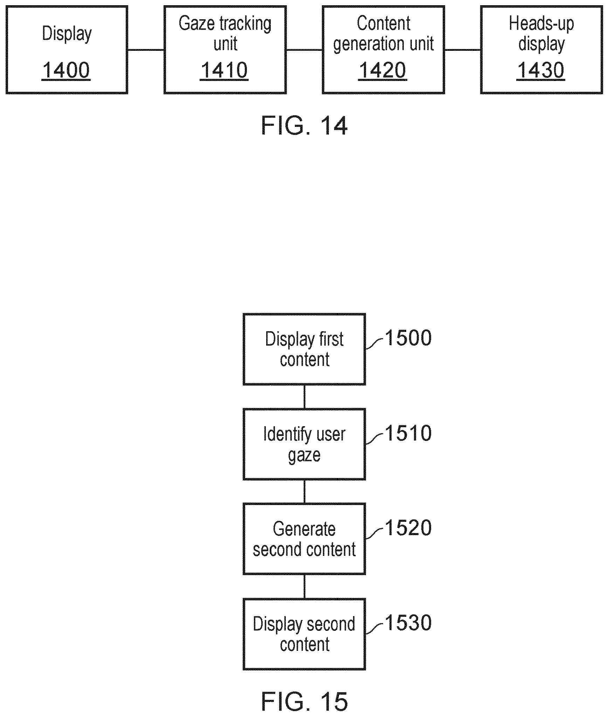

Figure 14 schematically illustrates a system for providing information to a user via a heads-up display. The system comprises a display 1400, a gaze tracking unit 1410, a content generation unit 1420, and a heads-up display 1430. While described above in the context of the user being the player of a game, the user could of course instead be a spectator of the game or a viewer/user of any other suitable content.

The display 1400 is operable to display images of a first content to the user. For example, this may be the display 500 as discussed above.

The gaze tracking unit 1410 is operable to identify the user's gaze direction with respect to one or more elements of the first content. The gaze tracking unit 1410 may further be operable to identify an area of user focus upon the display 500 in dependence upon the identified gaze direction, where the one or more elements may be in-content characters and/or objects. As described above, the elements may be characters in games or movies, or objects such as in-game weapons or doors.

In some embodiments, the gaze tracking unit 1410 comprises one or more inwards-facing cameras (such as the cameras 210 described with reference to Figure 2) associated with the heads-up display 1430. Alternatively, or in addition, a separate gaze tracking unit 1410 may be provided that is not formed as a part of the heads-up display 1430.

The content generation unit 1420 is operable to generate second content for display to a user in dependence upon the identified gaze direction. This second content may take any suitable form as described above. In particular, the second content may comprise subtitles for the first content; this may be suitable for use with movies or other video content, for example, or indeed any other content with associated audio.

Alternatively, or in addition, the second content may comprise information about one or more aspects of the first content; the one or more aspects may include in-game conditions and/or elements of interest in the first content. For example, the second content may relate to information about the virtual environment shown in the first content, goal conditions for succeeding a mission in the first content, and/or information about characters or objects in the first content.

As a further alternative or additional example, the second content may comprise system-level information unrelated to the first content. As discussed above, this may comprise information about the operation of the system (such as game session time and remaining power), information about one or more peripherals (such as the number of connected peripherals and their remaining battery power), and/or one or more notifications or other interactive elements not associated with the first content. Examples of such notifications or other interactive elements include social content (such as game invites from friends or chat room messages when live-streaming game content to spectators) and system/other application notifications (such as available updates).

As discussed with reference to Figures 9-11, in some embodiments the content generation unit 1420 may be operable to generate second content that varies in dependence upon a duration for which the identified gaze direction is maintained.

The heads-up display 1430 is operable to display the second content to the user; the heads-up display 1430 may be the same as the display unit 100 described above. The heads-up display 1430 is operable to display the second content so as to overlap at least a portion of the first content in the user's gaze direction.

The heads-up display 1430 may comprise a processing unit, wired/wireless communication unit (for example, to communicate with a remote processing unit such as a console that drives the display 1400), and/or a dedicated power supply as appropriate.

As noted previously herein, the content generation unit is optionally operable to intercept second content that would otherwise be displayed on the first display, and provide it to the heads-up display.

In some embodiments, the content generation unit may be operable to generate interaction elements on the display that the user is able to interact with to provide information to the application being presented on the display. For example, in the case of game invites (as discussed above) the user may be presented with the invite and an 'accept'/'decline' option that may be selected based upon the user's gaze direction (and optionally, a further confirmation input). Similarly, the user may be able to enter passwords (such as text or eye motion) or text-based inputs using such a system in a more secure or secretive manner (which may be suitable as an in-game mechanic).

The system of Figure 14 is an example of a system for providing information to a user via a heads-up display, the system comprising:
a display operable to display images of a first content to the user;
a processor operable to identify the user's gaze direction with respect to one or more elements of the first content, and to generate second content for display to a user in dependence upon the identified gaze direction; and
a heads-up display operable to display the second content to the user.

Figure 15 schematically illustrates a method for providing information to a user via a heads-up display.

A step 1500 comprises displaying, via a first display, images of a first content to the user.

A step 1510 comprises identifying the user's gaze direction with respect to one or more elements of the first content.

A step 1520 comprises generating second content for display to a user in dependence upon the identified gaze direction.

A step 1530 comprises displaying, via a heads-up display, the second content to the user.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

## Claims

1. A system for providing information to a user via a heads-up display, the system comprising:
a first display (500, 1400), separate to the heads-up display, operable to display images of a first content to the user;
a gaze tracking unit (1210, 1410) operable to identify the user's gaze direction focusing on one or more elements of the first content;
a content generation unit (1420) operable to generate second content for display to the user in dependence upon the identified gaze direction; and
the heads-up display (100, 1430), wherein the heads-up display is operable to display the second content to the user, and **characterized in that** the content generation unit is operable to generate the second content so that information is added to the displayed second content in dependence upon a duration for which the identified gaze direction is maintained focusing on an element of the first content.

2. A system according to claim 1, wherein the gaze tracking unit is operable to identify an area of user focus upon the first display in dependence upon the identified gaze direction.

3. A system according to claim 1, wherein the gaze tracking unit is operable to identify one or more elements of interest in the first content in dependence upon the identified gaze direction.

4. A system according to claim 3, wherein the one or more elements are in-content characters and/or objects.

5. A system according to claim 1, wherein the second content comprises subtitles for the first content.

6. A system according to claim 1, wherein the second content comprises information about one or more aspects of the first content.

7. A system according to claim 6, wherein the one or more aspects include in-game conditions and/or elements of interest in the first content.

8. A system according to claim 1, wherein the gaze tracking unit comprises one or more inwards-facing cameras (210) associated with the heads-up display.

9. A system according to claim 1, wherein the heads-up display is operable to display the second content so as to overlap at least a portion of the first content in the user's gaze direction.

10. A system according to claim 1, in which:
the content generation unit is operable to intercept content that would otherwise be displayed on the first display, and provide the intercepted content to the heads-up display to display the intercepted content to the user.

11. A system according to claim 1, wherein the heads-up display is a head-mountable display unit.

12. A method for providing information to a user via a heads-up display, the method comprising:
displaying (1500), via a first display separate to the heads-up display, images of a first content to the user;
identifying (1510) the user's gaze direction focusing on one or more elements of the first content;
generating (1520) second content for display to the user in dependence upon the identified gaze direction; and **characterized by**
displaying (1530), via the heads-up display, the second content to the user, wherein generating the second content for display to the user comprises generating the second content so that information is added to the displayed second content in dependence upon a duration for which the identified gaze direction is maintained focusing on an element of the first content.

13. Computer software which, when executed by a computer, causes the computer to carry out the method of claim 12.

14. A non-transitory machine-readable storage medium which stores computer software according to claim 13.

## Patentansprüche

1. System zum Bereitstellen von Informationen für einen Benutzer via eine Head-up-Anzeige, wobei das System Folgendes umfasst:
eine erste Anzeige (500, 1400), die von der Head-up-Anzeige getrennt und betreibbar ist, dem Benutzer Bilder eines ersten Inhalts anzuzeigen;
eine Blickverfolgungseinheit (1210, 1410), die betreibbar ist, die Blickrichtung des Benutzers, die auf ein oder mehrere Elemente des ersten Inhalts konzentriert ist, zu identifizieren;
eine Inhaltserzeugungseinheit (1420), die betreibbar ist, in Abhängigkeit von der identifizierten Blickrichtung einen zweiten Inhalt zum Anzeigen für den Benutzer zu erzeugen; und
die Head-up-Anzeige (100, 1430), wobei die Head-up-Anzeige betreibbar ist, dem Benutzer den zweiten Inhalt anzuzeigen, und **dadurch gekennzeichnet, dass** die Inhaltserzeugungseinheit betreibbar ist, den zweiten Inhalt zu erzeugen, derart, dass in Abhängigkeit von einer Dauer, für die die identifizierte Blickrichtung auf einem Element des ersten Inhalts konzentriert bleibt, Informationen zum angezeigten zweiten Inhalt hinzugefügt werden.

2. System nach Anspruch 1, wobei die Blickverfolgungseinheit betreibbar ist, in Abhängigkeit von der identifizierten Blickrichtung einen Bereich einer Benutzerkonzentration auf der ersten Anzeige zu identifizieren.

3. System nach Anspruch 1, wobei die Blickverfolgungseinheit betreibbar ist, in Abhängigkeit von der identifizierten Blickrichtung ein oder mehrere Elemente von Interesse im ersten Inhalt zu identifizieren.

4. System nach Anspruch 3, wobei das eine oder die mehreren Elemente Zeichen und/oder Objekte im Inhalt sind.

5. System nach Anspruch 1, wobei der zweite Inhalt Untertitel für den ersten Inhalt umfasst.

6. System nach Anspruch 1, wobei der zweite Inhalt Informationen über einen oder mehrere Aspekte des ersten Inhalts umfasst.

7. System nach Anspruch 6, wobei der eine oder die mehreren Aspekte Bedingungen für ein Spiel und/oder Elemente von Interesse im ersten Inhalt beinhalten.

8. System nach Anspruch 1, wobei die Blickverfolgungseinheit eine oder mehrere nach innen gerichtete Kameras (210) umfasst, die mit der Head-up-Anzeige verknüpft sind.

9. System nach Anspruch 1, wobei die Head-up-Anzeige betreibbar ist, den zweiten Inhalt derart anzuzeigen, dass er mindestens einen Abschnitt des ersten Inhalts in der Blickrichtung des Benutzers überlappt.

10. System nach Anspruch 1, bei dem:
die Inhaltserzeugungseinheit betreibbar ist, einen Inhalt, der andernfalls auf der ersten Anzeige angezeigt werden würde, abzufangen und den abgefangenen Inhalt für die Head-up-Anzeige bereitzustellen, um dem Benutzer den abgefangenen Inhalt anzuzeigen.

11. System nach Anspruch 1, wobei die Head-up-Anzeige eine kopfmontierbare Anzeigeeinheit ist.

12. Verfahren zum Bereitstellen von Informationen für einen Benutzer via eine Head-up-Anzeige, wobei das Verfahren Folgendes umfasst:
Anzeigen (1500) von Bildern eines ersten Inhalts für den Benutzer via eine erste Anzeige, die von der Head-up-Anzeige getrennt ist;
Identifizieren (1510) der Blickrichtung des Benutzers, die auf ein oder mehrere Elemente des ersten Inhalts konzentriert ist;
Erzeugen (1520) eines zweiten Inhalts zum Anzeigen für den Benutzer in Abhängigkeit von der identifizierten Blickrichtung und **gekennzeichnet durch**
Anzeigen (1530) des zweiten Inhalts via die Head-up-Anzeige für den Benutzer, wobei das Erzeugen des zweiten Inhalts zur Anzeige für den Benutzer das Erzeugen des zweiten Inhalts derart umfasst, dass in Abhängigkeit von einer Dauer, für die die identifizierte Blickrichtung auf einem Element des ersten Inhalts konzentriert bleibt, Informationen zum angezeigten zweiten Inhalt hinzugefügt werden.

13. Computersoftware, die, wenn sie von einem Computer ausgeführt wird, den Computer veranlasst, das Verfahren nach Anspruch 12 durchzuführen.

14. Nichttransitorisches maschinenlesbares Speichermedium, auf dem eine Computersoftware nach Anspruch 13 gespeichert ist.

## Revendications

1. Système de fourniture d'informations à un utilisateur par l'intermédiaire d'un affichage tête haute, le système comprenant :
un premier affichage (500, 1400), distinct de l'affichage tête haute, utilisable pour afficher des images d'un premier contenu à l'utilisateur ;
une unité de suivi de regard (1210, 1410) utilisable pour identifier la direction du regard de l'utilisateur qui se focalise sur un ou des éléments du premier contenu ;
une unité de génération de contenu (1420) utilisable pour générer un deuxième contenu pour un affichage à l'utilisateur en fonction de la direction de regard identifiée ; et
l'affichage tête haute (100, 1430), l'affichage tête haute étant utilisable pour afficher le deuxième contenu à l'utilisateur, et **caractérisé en ce que** l'unité de génération de contenu est utilisable pour générer le deuxième contenu de sorte que des informations sont ajoutées au deuxième contenu affiché en fonction d'une durée pendant laquelle la direction de regard identifiée est maintenue qui se focalise sur un élément du premier contenu.

2. Système selon la revendication 1, l'unité de suivi de regard étant utilisable pour identifier une zone de focalisation de l'utilisateur lors du premier affichage en fonction de la direction de regard identifiée.

3. Système selon la revendication 1, l'unité de suivi de regard étant utilisable pour identifier un ou des éléments d'intérêt dans le premier contenu en fonction de la direction de regard identifiée.

4. Système selon la revendication 3, le ou les éléments étant des caractères et/ou des objets dans le contenu.

5. Système selon la revendication 1, le deuxième contenu comprenant des sous-titres pour le premier contenu.

6. Système selon la revendication 1, le deuxième contenu comprenant des informations concernant un ou des aspects du premier contenu.

7. Système selon la revendication 6, le ou les aspects incluant des conditions et/ou des éléments d'intérêt dans le jeu dans le premier contenu.

8. Système selon la revendication 1, l'unité de suivi de regard comprenant une ou des caméras orientées vers l'intérieur (210) associées à l'affichage tête haute.

9. Système selon la revendication 1, l'affichage tête haute étant utilisable pour afficher le deuxième contenu de manière à chevaucher au moins une partie du premier contenu dans la direction du regard de l'utilisateur.

10. Système selon la revendication 1, dans lequel :
l'unité de génération de contenu est utilisable pour intercepter un contenu qui serait autrement affiché sur le premier affichage, et fournir le contenu intercepté à l'affichage tête haute pour afficher le contenu intercepté à l'utilisateur.

11. Système selon la revendication 1, l'affichage tête haute étant une unité d'affichage pouvant être montée sur une tête.

12. Procédé de fourniture d'informations à un utilisateur par l'intermédiaire d'un affichage tête haute, le procédé comprenant :
l'affichage (1500), par l'intermédiaire d'un premier affichage séparé de l'affichage tête haute, d'images d'un premier contenu à l'utilisateur ;
l'identification (1510) de la direction du regard de l'utilisateur qui se focalise sur un ou des éléments du premier contenu ;
la génération (1520) d'un deuxième contenu pour un affichage à l'utilisateur en fonction de la direction de regard identifiée ; et **caractérisé par**
l'affichage (1530), par l'intermédiaire de l'affichage tête haute, du deuxième contenu à l'utilisateur, la génération du deuxième contenu pour l'affichage à l'utilisateur comprenant la génération du deuxième contenu de sorte que des informations sont ajoutées au deuxième contenu affiché en fonction d'une durée pendant laquelle la direction de regard identifiée est maintenue qui se focalise sur un élément du premier contenu.

13. Logiciel informatique qui, lorsqu'il est exécuté par un ordinateur, amène l'ordinateur à mettre en œuvre le procédé selon la revendication 12.

14. Support de stockage lisible par machine non transitoire qui stocke un logiciel informatique selon la revendication 13.
